# EUROPÄISCHE PATENTSCHRIFT

(11) **EP 4 328 472 B1**
(45) Veröffentlichungstag und Bekanntmachung des Hinweises auf die Patenterteilung: **02.12.2026**
(21) Anmeldenummer: 23188318.2
(22) Anmeldetag: 28.07.2023
(51) Int. Cl.: F16K 27/00

(54) **FLANSCH-VENTIL-ANORDNUNG UND FLANSCH**
FLANGE-VALVE ASSEMBLY AND FLANGE
ENSEMBLE SOUPAPE À BRIDE ET BRIDE

(30) Priorität: 23.08.2022 DE 102022121218
(43) Veröffentlichungstag der Anmeldung: 28.02.2024
(73) Patentinhaber: Thomas GmbH, 57562 Herdorf (DE)
(72) Erfinder: Rosario, Roy, Milwaukee, 53222-4715 (US); Buss, Juri, 57537 Wissen (DE); Diehl, Matthias, 35792 Löhnberg (DE); Becker, Jannik, 57080 Siegen (DE)

(56) Entgegenhaltungen:
- EP-A1- 2 113 654
- EP-A2- 0 735 267
- CN-B- 105 042 151
- DE-A1- 102007 041 880
- DE-A1- 102017 222 604
- DE-A1- 102018 105 259
- DE-A1- 19 635 263
- US-B1- 6 302 088

## Beschreibung

Die Erfindung betrifft eine Flansch-Ventil-Anordnung zur Befestigung von Ventilen in oder an einer Vorrichtung.

Ventile, Flansche und Flansch-Ventil-Anordnungen sind beispielsweise aus US 6 302 088 B1, DE 196 35 263 A1, EP 0 735 267 A2, DE 10 2007 041880 A1, EP 2 113 654 A1, DE 10 2018 105259 A1, CN 105 042 151 B oder DE 10 2017 222604 A1 bekannt.

Herkömmlicherweise werden Ventile zur Steuerung von Fluiden in Vorrichtungen eingeführt bzw. eingesteckt und mittels eines Flansches an der Vorrichtung befestigt. Herkömmliche Flansche sind dabei entweder fest mit dem Ventil verbunden oder werden als lose Einzelteile geliefert. Bei den fest mit dem Ventil verbundenen Flanschen wird der Flansch beispielsweise mit einem Gehäuse oder einer Ventilhülse des Ventils verschweißt. Alternativ dazu wird der Flansch mittels Tiefziehen einteilig mit dem Ventilgehäuse gebildet.

Beide Lösungen, nämlich fest mit dem Ventil verbundene Flansche oder Flansche als lose Einzelteile, weisen Befestigungsbohrungen auf, durch welche eine Befestigungsschraube zur Verbindung des Flansches mit der Vorrichtung geschraubt wird. Durch das Befestigen des Flansches an der Vorrichtung wird das Ventil an der Vorrichtung befestigt.

Die fest verbundenen herkömmlichen Flansche haben dabei die Nachteile, dass die Positionierung der Befestigungsbohrung mit Bezug auf eine Ausrichtung des Ventils vordefiniert ist, sodass eine Anpassung der relativen Lage des Ventils zur Vorrichtung nicht möglich ist. Dadurch lässt sich der Platzbedarf für die Vorrichtung nicht durch eine Änderung der relativen Lage des Ventils oder bspw. der relativen Lage von Stecker-Verbindungen des Ventils ändern.

Die herkömmlichen Flansche als Einzelteile haben den Nachteil, dass diese nicht verliergesichert sind. Dadurch entsteht ein hoher Aufwand bei der Montage des Ventils, da ein Monteur stets sicherstellen muss, dass die Anzahl der Flansche und der Ventile gleich ist. Des Weiteren muss bei der Montage solcher Flansche als Einzelteile das Ventil und der Flansch zueinander ausgerichtet werden, bevor das Ventil mittels des Flansches an der Vorrichtung befestigt wird. Außerdem kann es bei den herkömmlichen Flanschen als Einzelteile vorkommen, dass sich eine relative Lage zwischen dem Flansch und dem Ventil verändert, sobald die Befestigungsschraube zur Befestigung des Flansches an der Vorrichtung festgezogen wird. Dadurch wird die Befestigungsstärke des Ventils ebenfalls reduziert. Vibrationen der Vorrichtung können dazu führen, dass eine Befestigung bzw. VerdrehSicherung des montierten Ventils und/oder des montierten Flansches reduziert wird.

Es ist eine Aufgabe der vorliegenden Erfindung, die vorgenannten Probleme zu lösen. Insbesondere ist es eine Aufgabe der vorliegenden Erfindung, eine Flansch-Ventil-Anordnung zur Befestigung von Ventilen in oder an einer Vorrichtung bereitzustellen, welche eine verliersichere Verbindung zwischen dem Ventil und dem Flansch ermöglichen, eine Montage des Ventils an der Vorrichtung erleichtern, einen Platzbedarf dieser verringern, kostengünstig hergestellt werden können, Robustheit gegenüber Vibrationen sicherstellen und eine Flexibilität bei der Ausrichtung des Ventils relativ zum Flansch und/oder relativ zur Vorrichtung erhöhen.

Die Lösung dieser Aufgabe erfolgt durch die Merkmale des unabhängigen Anspruchs 1. Die Unteransprüche haben vorteilhafte Ausgestaltungen der Erfindung zum Inhalt.

Die Lösung dieser Aufgabe erfolgt durch eine erfindungsgemäße Flansch-Ventil-Anordnung zur Befestigung von Ventilen in oder an einer Vorrichtung. Darin weist die Flansch-Ventil-Anordnung gemäß Unteraspekten der vorliegenden Erfindung zumindest ein Ventil und zumindest einen Flansch auf. Das zumindest eine Ventil und der zumindest eine Flansch sind zumindest in einem nicht in der Vorrichtung eingebauten Zustand des Ventils lösbar und verliersicher miteinander verbindbar.

Dadurch ist sichergestellt, dass der Flansch (oder das Ventil) nicht als Einzelteil verloren gehen kann, während eine aufwendige und kostenintensive Schweißverbindung zwischen Flansch und Ventilgehäuse vermieden wird. Dadurch wird außerdem ein aufwendiges gemeinsames Tiefziehen des Flansches zusammen mit dem Ventilgehäuse vermieden, wodurch die Herstellungskosten reduziert werden können. Durch die lösbare Verbindung wird außerdem erreicht, dass eine Montage des Ventils an der Vorrichtung mittels des Flansches vereinfacht wird.

Weitere vorteilhafte Ausführungen ergeben sich aus den abhängigen Ansprüchen.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine Querschnittsdarstellung einer Flansch-Ventil-Anordnung gemäß einer ersten Ausführungsform welche außerhalb des beanspruchten Gegenstands der Erfindung liegt;
Fig. 2 eine Querschnittsdarstellung entlang einer Linie B-B der Figur 1;
Fig. 3 eine Querschnittsdarstellung einer Flansch-Ventil-Anordnung gemäß einer zweiten Ausführungsform;
Fig. 4 eine Querschnittsdarstellung einer Flansch-Ventil-Anordnung gemäß einer dritten Ausführungsform welche außerhalb des beanspruchten Gegenstands der Erfindung liegt;
Fig. 5 eine Querschnittsdarstellung einer Flansch-Ventil-Anordnung gemäß einer vierten Ausführungsform welche außerhalb des beanspruchten Gegenstands der Erfindung liegt;
Fig. 6 eine weitere Querschnittsdarstellung der Flansch-Ventil-Anordnung gemäß der vierten Ausführungsform welche außerhalb des beanspruchten Gegenstands der Erfindung liegt;
Fig. 7 eine perspektivische Darstellung der Flansch-Ventil-Anordnung gemäß der vierten Ausführungsform welche außerhalb des beanspruchten Gegenstands der Erfindung liegt;
Fig. 8 eine perspektivische Darstellung einer Flansch-Ventil-Anordnung gemäß einer fünften Ausführungsform;
Fig. 9 eine Querschnittsdarstellung einer Flansch-Ventil-Anordnung gemäß einer
sechsten Ausführungsform welche außerhalb des beanspruchten Gegenstands der Erfindung liegt; und
Fig. 10 eine Querschnittsdarstellung einer Flansch-Ventil-Anordnung gemäß einer siebten Ausführungsform welche außerhalb des beanspruchten Gegenstands der Erfindung liegt.

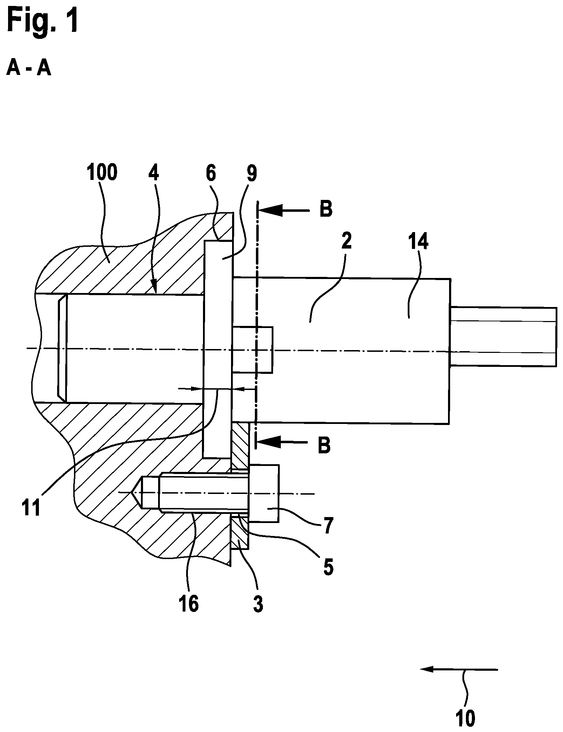

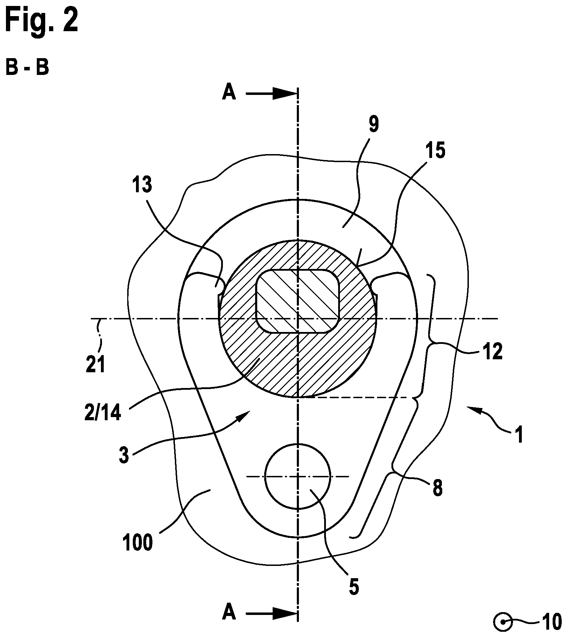

Die Figuren 1 und 2 zeigen eine erste Ausführungsform einer Flansch-Ventil-Anordnung 1. Dabei zeigt die Fig. 1 eine erste Querschnittsdarstellung der Flansch-Ventil-Anordnung 1 entlang einer Querschnittslinie A-A. Die Fig. 2 zeigt eine zweite Querschnittsdarstellung der Flansch-Ventil-Anordnung 1 entlang einer Querschnittslinie B-B sowie eine eingezeichnete Querschnittslinie A-A für die Fig. 1.

Die Flansch-Ventil-Anordnung 1 weist ein Ventil 2 auf. Das Ventil 2 ist beispielsweise ein Vorsteuerventil oder ein sogenanntes Cartridge-Ventil. Das Ventil 2 ist mit einer Vorrichtung 100 verbaut. Die Fig. 1 stellt außerdem eine Ventilhülse des Ventils 2 dar, wobei die Ventilhülse ein Abschnitt des Ventils 2 ist, welcher in die Vorrichtung 100 hineinragt.

Das Ventil 2 ist in die Vorrichtung 100 eingeführt. Die Vorrichtung 100 weist hierfür eine Aufnahme 4 zur Aufnahme des Ventils 2 auf. Das Ventil 2 ist dazu eingerichtet, einen Fluss von einem oder von mehreren Fluiden in der Vorrichtung 100 zu steuern.

Die Flansch-Ventil-Anordnung 1 weist außerdem einen Flansch 3 auf. Der Flansch 3 ist ein sogenannter loser Flansch 3. Mit anderen Worten ist der Flansch 3 ein von dem Ventil 2 separates Bauteil.

Bei der Flansch-Ventil-Anordnung 1 sind das Ventil 2 und der Flansch 3 lösbar und verliersicher miteinander verbindbar. Mit anderen Worten ist es hierbei möglich, den Flansch 3 und das Ventil 2 derart miteinander zu verbinden, dass der Flansch 3, beispielsweise bei dem Transport oder bei der Auslieferung des Ventils 2, nicht verloren geht. Diese Verbindung verbindet den Flansch 3 und das Ventil 2 insbesondere in einem nicht in der Vorrichtung 100 eingebauten Zustand des Ventils 2.

Der in Fig. 1 dargestellte Zustand ist ein in der Vorrichtung 100 eingebauter Zustand des Ventils 2. Wird das Ventil 2 von der Vorrichtung 100 gelöst, oder wurde das Ventil 2 nicht bereits in die Vorrichtung 100 eingeführt, so sind der Flansch 3 und das Ventil 2 (trotzdem) miteinander lösbar und verliersicher verbindbar.

Im Folgenden wird anhand der Figuren 1 und 2 ein Ausführungsbeispiel einer solchen Verbindung erläutert.

Wie der Fig. 1 zu entnehmen ist, wird das Ventil 2 in die Aufnahme 4 der Vorrichtung 100 eingeführt und mittels des Flansches 3 an der Vorrichtung befestigt. Dabei weist der Flansch 3 eine Durchgangsbohrung 5 auf, durch welche eine Schraube 7 zur Befestigung des Flansches 3 an der Vorrichtung 100 durchgeführt wird. Die Durchgangsbohrung 5 ist, wie in Fig. 2 dargestellt, Teil eines Befestigungsabschnitts 8 des Flansches 3.

Das Ventil weist außerdem einen Flächenabschnitt 9 auf, wie in den Figuren 1 und 2 dargestellt. Der Flächenabschnitt 9 des Ventils 2 lagert in einem in der Vorrichtung 100 eingeführten Zustand des Ventils 2 in einer Aussparung 6 der Vorrichtung 100 bzw. der Aufnahme 4 der Vorrichtung 100.

In einer vorteilhaften Ausgestaltung des Ventils 2 ist eine Dicke 11 des Flächenabschnitts 9 des Ventils 2 in einer Einschubrichtung 10, entlang welcher das Ventil 2 in die Vorrichtung 100 eingeführt wird, größer als eine Tiefe der Aussparung 6 der Vorrichtung 100. Dadurch wird eine Vorspannung bei der Befestigung des Ventils 2 an der Vorrichtung 100 durch den Flansch 3, welcher an dem Flächenabschnitt 9 und an der Vorrichtung 100 nahe der Aussparung 6 der Vorrichtung 100 anliegt, erzeugt.

Wie in Fig. 2 genauer dargestellt weist der Flansch 3 einen Aufsteckabschnitt 12 auf. Der Aufsteckabschnitt 12 ist dazu eingerichtet, den Flansch 3 verliersicher an dem Ventil 2 zu befestigen.

Hierfür weist der Aufsteckabschnitt 12 eine Teilkreisform, insbesondere eine Gabelschlüsselform, auf. Des Weiteren weist der Aufsteckabschnitt 12 des Flansches 3 in diesem Ausführungsbeispiel Haltenasen 13 auf, welche in dem in Fig. 2 dargestellten mit dem Ventil 2 verbundenen Zustand des Flansches 3 an dem Ventil 2 anliegen. Alternativ oder zusätzlich dazu weist das Ventil 2 Haltenasen 13 auf, welche an dem Flansch 3 anliegen.

In dieser Ausführungsform liegen die Haltenasen 13 bzw. der Aufsteckabschnitt 12 an einer Außenfläche 15 des Ventils 2 an. Eine sichtbare Querschnittsfläche 14 des Ventils 2 ist hierbei kreisrund. Die Querschnittsfläche 14 ist die dargestellte Fläche des Querschnittsabschnitts (an der Linie B-B in Fig. 1) des Ventils 2, an welchem der Flansch 3 befestigt wird.

Der Aufsteckabschnitt 12 ist insbesondere derart ausgestaltet, dass er in dem in Fig. 2 dargestellten aufgesteckten Zustand mindestens die Hälfte des Umfangs der Außenfläche 15 des Ventils 2 umschließt. Mit anderen Worten ragen die Haltenasen 13 des Flansches 3 über einen Durchmesser 21 durch die Querschnittsfläche 14 des Ventils 2. Vorteilhafterweise beträgt dabei ein Innenwinkel des Aufsteckabschnitts 12 somit mindestens 180°.

Der Aufsteckabschnitt 12 des Flansches 3 ist dabei insbesondere derart ausgebildet, dass er gegenüber dem Ventil 2 vorgespannt ist. Dadurch lässt sich der Aufsteckabschnitt 12 an dem Ventil 2 aufklipsen. Die Haltenasen 13 werden dabei gegen die Außenfläche 15 des Ventils 2 durch die Vorspannung des Flansches 3 gepresst. Somit ist der Flansch 3 verlier-sicher an dem Ventil 2 befestigt. Die Vorspannung des Flansches 3 wird durch eine Presspassung zwischen dem Flansch 3 und dem Ventil 2 erreicht.

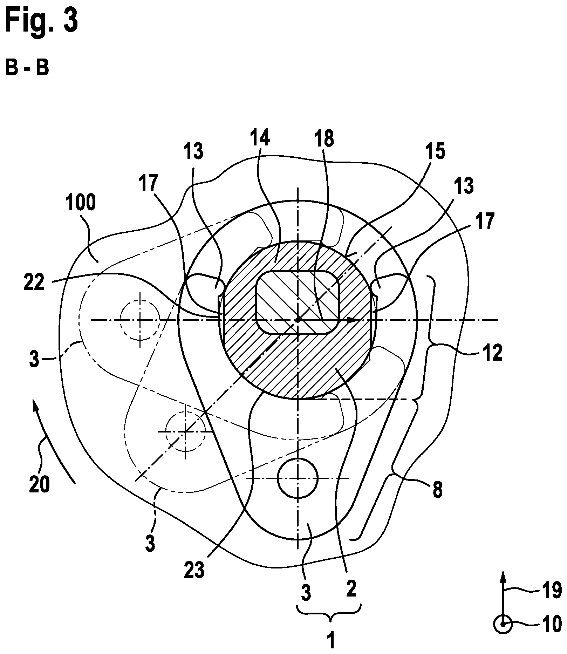

Vorteilhafterweise ist dabei der Flansch 3 relativ zum Ventil 2 drehbar, wie beispielhaft in Fig. 3 dargestellt. Dadurch lässt sich der Flansch 3 in einem an dem Ventil 2 befestigten bzw. aufgeklipsten Zustand positionieren, um eine Befestigung des Ventils 2 an der Vorrichtung 100 vorzunehmen. Dabei kann insbesondere der Befestigungsabschnitt 8 des Flansches 3 an einer Bohrung 16 der Vorrichtung 100 ausgerichtet werden. Des Weiteren ist es hierdurch möglich, insbesondere vor dem Festziehen der Schraube 7, das Ventil 2 relativ zur Vorrichtung 100 auszurichten, um bspw. möglichst platzsparend an der Vorrichtung 100 montiert zu werden.

Die Fig. 3 zeigt eine Querschnittsdarstellung einer Flansch-Ventil-Anordnung 1 gemäß einer zweiten Ausführungsform.

Wie der Fig. 3 zu entnehmen ist, ist der Flansch 3 drehbar an dem Ventil 2 befestigt bzw. aufgeklipst.

In dieser Ausführungsform weist die Querschnittsfläche 14 des Ventils 2 eine im Wesentlichen runde Form auf. Außerdem weist die Querschnittsfläche 14 hierbei zwei gerade Umfangsabschnitte 17 auf. Ein Radius 18 der Querschnittsfläche 14 des Ventils 2 ist an den geraden Abschnitten 17 geringer, als an den anderen Abschnitten der Querschnittsfläche 14. Der Radius 18 ist also geringer an den geraden Abschnitten 17 als an den runden Abschnitten der Querschnittsfläche 14.

Des Weiteren weist der Flansch 3 in dieser Ausführungsform gerade Abschnitte 22 in dem Aufsteckabschnitt 12 auf. Die geraden Abschnitte 22 verbinden jeweils die Haltenase 13 mit einem runden Abschnitt 23 des Aufsteckabschnitts 12.

Fig. 3 stellt insbesondere einen Montage-Ablauf des Flansches 3 an dem Ventil 2 dar. Dabei ist mit durchgezogener Linie ein erster Schritt dargestellt, bei welchem der Flansch 3 entlang einer Aufsteckrichtung 19 senkrecht zur Einschubrichtung 10 auf das Ventil 2 gesteckt wurde. Dabei gleiten die Haltenasen 13 des Flansches 3 entlang den geraden Umfangsabschnitten 17 des Ventils 2, sodass ein einfaches Fügen des Flansches 3 an dem Ventil 2 ermöglicht ist.

In Aufsteckrichtung 19 hinter den geraden Abschnitten 17 ist der Radius 18 der Querschnittsfläche 14 an den runden Abschnitten größer als an den geraden Umfangsabschnitten 17, sodass die Haltenasen 13, insbesondere durch die Vorspannung des Flansches 3, an der runden Außenfläche 15 des Ventils anliegen bzw. gegen die Außenfläche 15 gepresst sind. Dadurch ist der Flansch 3 verlier-sicher befestigt.

Wie des Weiteren der Fig. 3 zu entnehmen ist, wird der Flansch 3 in einem weiteren Schritt relativ zum Ventil 2 gedreht. Dadurch werden die Haltenasen 13 entlang der Außenfläche 15 des Ventils geführt, sodass eine Verbindungskraft zwischen dem Flansch 3 und dem Ventil 2 in Abhängigkeit der relativen Drehung entlang einer Drehrichtung 20 zunimmt oder abnimmt. An Umfangsabschnitten des Ventils 2, an welchen kein gerader Umfangsabschnitt 17 vorhanden ist, ist die Verbindungskraft mittels der Vorspannkraft des Flansches 3 am größten, während die Verbindungskraft an den geraden Umfangsabschnitten 17 des Ventils 2 am geringsten ist.

Hierdurch lässt sich der Flansch 3 relativ zum Ventil 2 und/oder das Ventil 2 relativ zur Vorrichtung 100 insbesondere vor dem (endgültigen) Befestigen des Ventils 2 an der Vorrichtung 100 genauer positionieren. Beispielsweise kann dabei die Flansch-Ventil-Anordnung 1 mit an dem Ventil 2 befestigtem Flansch 3 auf die Vorrichtung 100 durch Einführen des Ventils 2 gesteckt werden, daraufhin das Ventil 2 und/oder der Flansch 3 in seine/ihre endgültige(n) Position(en) gedreht werden und daraufhin die Schraube 7 festgezogen werden (siehe Fig. 1).

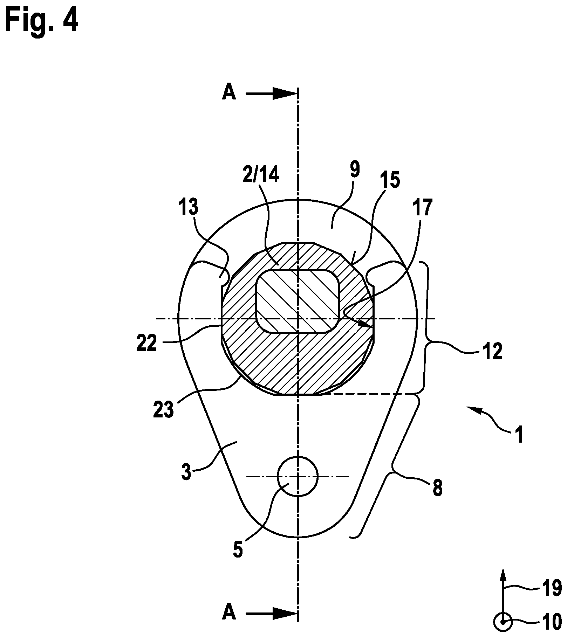

Die Figur 4 zeigt eine Querschnittsdarstellung einer Flansch-Ventil-Anordnung 1 gemäß einer dritten Ausführungsform.

In dieser Ausführungsform weist der Querschnittsabschnitt bzw. die Querschnittsfläche 14 des Ventils 2 eine mehrkantige Form am Außenumfang des Ventils 2 auf. Bevorzugt weist die Querschnittsfläche 14 eine vier-, fünf-, sechs- oder mehrkantige Außenform auf. In diesem Beispiel weist die Querschnittsfläche 14 eine sechszehnkantige Außenform auf.

Wie in Fig. 4 dargestellt bilden die Haltenasen 13 des Flansches 3 jeweils mit einer an dem geraden Abschnitt 22 des Flansches 3 anliegenden Kante der Querschnittsfläche 14 (gerade Umfangsabschnitte 17) einen Formschluss, sodass der Flansch 3 verlier-sicher befestigt ist. Hierdurch wird ein Anklipsen des Flansches 3 an dem Ventil 2 erreicht.

Der Flansch 3 wird vorteilhafterweise aufgespannt, um die Haltenasen 13 an den anliegenden Kanten der Querschnittsfläche 14 vorbeizuziehen, um dadurch den Flansch 3 wieder von dem Ventil 2 abzuziehen.

Durch die mehrkantige Außenform des Ventils 2 wird außerdem erreicht, dass der Flansch 3 an gewissen Drehpositionen relativ zum Ventil 2 einrastet.

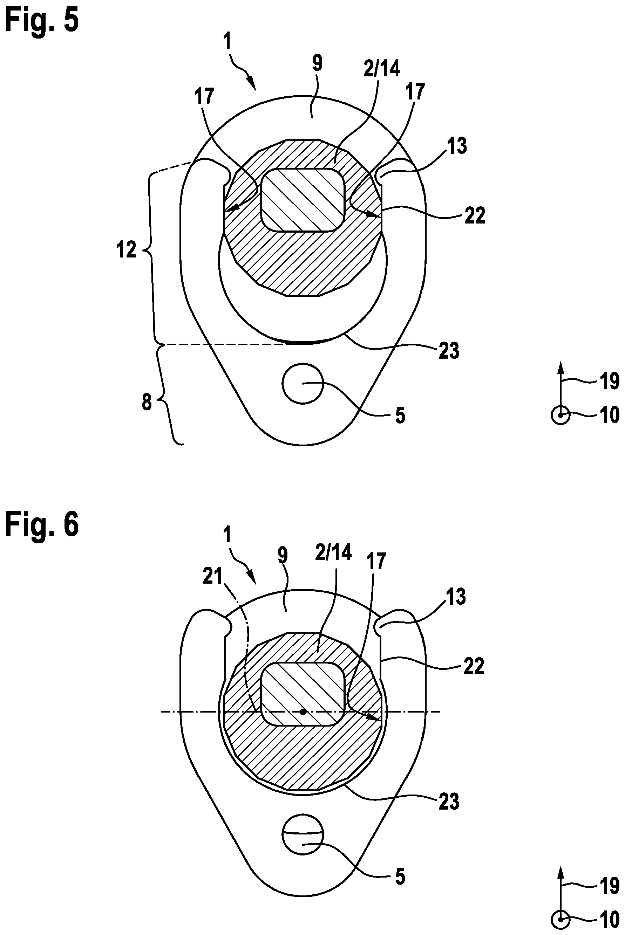

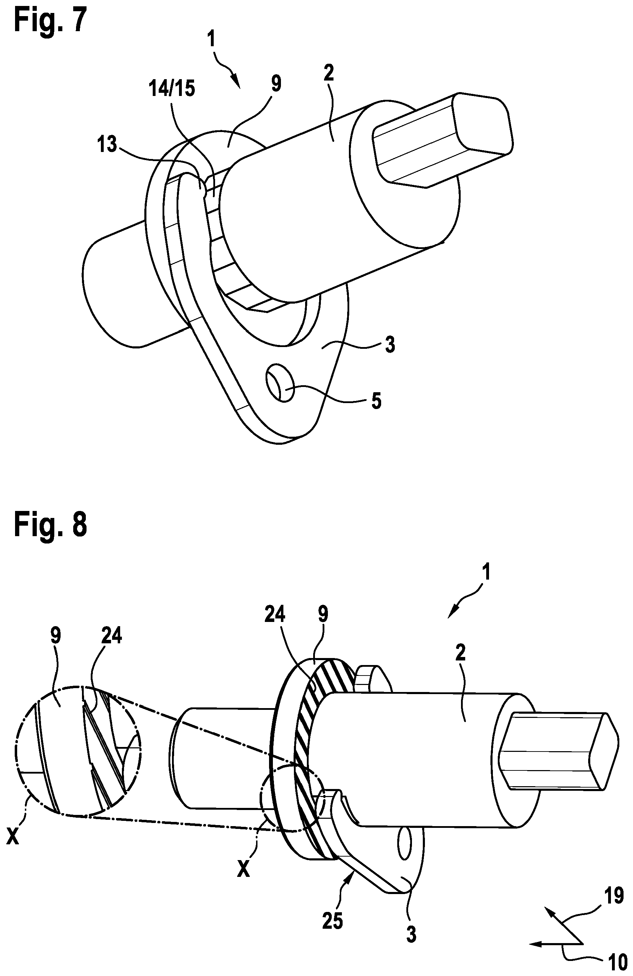

Die Figuren 5 und 6 zeigen jeweils eine Querschnittsdarstellung einer Flansch-Ventil-Anordnung 1 gemäß einer vierten Ausführungsform. Die Fig. 7 zeigt eine perspektivische Darstellung der Flansch-Ventil-Anordnung 1 gemäß der vierten Ausführungsform.

Hierbei weist der Querschnittsabschnitt bzw. die Querschnittsfläche 14 des Ventils 2 die mehrkantige Außenform auf.

Des Weiteren weist der Flansch 3 die geraden Abschnitte 22 und den runden Abschnitt 23 sowie die Haltenasen 13 auf.

Die Figuren 5 und 6 zeigen insbesondere einen Aufsteckablauf des Flansches 3 auf das Ventil 2, wobei die Fig. 6 einen vollständig aufgesteckten Zustand darstellt.

In diesem Ausführungsbeispiel ist, wie ein Vergleich der Fig. 6 mit der Fig. 4 zeigt, ein Innenumfang des runden Abschnitts 23 des Flansches 3 vergrößert. Hierbei ragt der runde Abschnitt 23 über den Durchmesser 21 der Querschnittsfläche 14 des Ventils 2. Bevorzugt ist dabei ein Innenumfang des runden Abschnitts 23, also ein Umfang des Aufsteckabschnitts 12 vom Ende des Aufsteckabschnitts 12 am Befestigungsabschnitt 8 bis zu den geraden Abschnitten 22 des Aufsteckabschnitts 12 zumindest 180°.

Die Fig. 6 stellt einen vollständig aufgesteckten Zustand des Flansches 3 dar, bei welchem der Flansch 3 bis zu seinem Anschlag (Ende des Aufsteckabschnitts 12 am Befestigungsabschnitt 8) auf das Ventil 2 aufgesteckt ist. In diesem Zustand ist der Flansch 3 verlier-sicher und lösbar an dem Ventil 2 befestigt.

In Fig. 6 ist außerdem erkennbar, dass die Durchgangsbohrung 5 durch den Flächenabschnitt 9 des Ventils 2 blockiert ist, sodass die Schraube 7 nicht durch Durchgangsöffnung 5 durchgeführt werden kann. Alternativ dazu kann der Flächenabschnitt 9 des Ventils 2 vorteilhafterweise zumindest eine Aussparung und/oder zumindest eine Durchgangsbohrung 5 aufweisen, durch welche die Schraube 7 im vollständig aufgesteckten Zustand des Flansches 3 durchgeführt werden kann. Solche Aussparrungen können dadurch insbesondere vorbestimmte relative Drehpositionen des Flansches 3 zum Ventil 2 festlegen.

Zur Befestigung der Flansch-Ventil-Anordnung 1 wird der Flansch 3 teilweise, entgegen der Aufsteckrichtung 19, von dem Ventil 2 abgezogen, wie in Fig. 5 und Fig. 7 dargestellt. Dabei bewirken die Haltenasen 13 einen Formschluss mit Kanten des Querschnittsabschnitts 14 des Ventils 2, wie auch mit Bezug auf Fig. 4 erläutert. Durch diese Form des Flansches 3 ist dieser in dem teilweise aufgesteckten Zustand der Fig. 5 relativ zum Ventil 2 drehbar und gleichzeitig (weiterhin) verlier-sicher an diesem befestigt.

Hierbei variiert eine Verbindungskraft, verursacht durch die Vorspannkraft bzw. Presspassung des Flansches 3, zwischen dem Flansch 3 und dem Ventil 2 in Abhängigkeit einer Einschubtiefe entlang der Einschubrichtung 19. In dem teilweise aufgesteckten Zustand der Fig. 5 ist die Verbindungskraft größer, als in dem vollständig aufgesteckten Zustand der Fig. 6. Dadurch, dass ein Abstand der Haltenasen 13 zueinander, wie in Fig. 5 dargestellt, geringer ist, als ein Abstand der geraden Abschnitte 22 zueinander, ist eine Verbindungskraft maximal, wenn die Haltenasen 13 an den zur Aufsteckrichtung 19 parallelen Kanten des Querschnittsabschnitt 14 anliegen (an den geraden Abschnitten 17 des Querschnittsabschnitts 14 anliegen).

Die Flansch-Ventil-Anordnung 1 wird in dem in Fig. 5 und Fig. 7 dargestellten teilweise aufgestecktem Zustand an der Vorrichtung 100 befestigt.

Fig. 8 zeigt eine perspektivische Darstellung einer Flansch-Ventil-Anordnung 1 gemäß einer fünften Ausführungsform.

In dieser Ausführungsform weist der Flächenabschnitt 9 des Ventils 2 geometrische Strukturen 24 auf. Die geometrischen Strukturen 24 sind hierbei Erhebungen, insbesondere Rippen 24. Die Rippen 24 stellen eine zusätzliche Formschlussverbindung zwischen dem Flansch 3, genauer einer unteren Oberfläche 25 des Flansches 3, und dem Ventil 2 bereit. Diese Formschlussverbindung wirkt insbesondere einem Verdrehen des Ventils 2 in einem in der Vorrichtung 100 eingebauten Zustand der Flansch-Ventil-Anordnung 1 entgegen.

Vorzugsweise werden die Rippen 24 beim Befestigen des Ventils 2 an der Vorrichtung 100, beispielsweise beim Festziehen der Schraube 7, verformt.

Vorzugsweise weist die untere Oberfläche 25 des Flansches 3 ebenfalls geometrische Strukturen (nicht dargestellt) auf. Die geometrischen Strukturen des Flansches 3 sind insbesondere derart ausgebildet, dass sie die geometrischen Strukturen 24 des Flächenabschnitts 9 des Ventils 2 zumindest zum Teil und zumindest teilweise aufnehmen. Beispielsweise sind die geometrischen Strukturen des Flansches 3 Nuten, in welchen die Rippen 24 zumindest teilweise im befestigten Zustand des Flansches 3 aufgenommen sind.

Die in Fig. 8 beschriebene Ausführungsform der geometrischen Strukturen 24 ist auf ein Ventil 2 und/oder auf einen Flansch 3 und/oder auf einer Vorrichtung 100, insbesondere jedes dieser Elemente 2, 3, 100 in Alleinstellung, übertragbar.

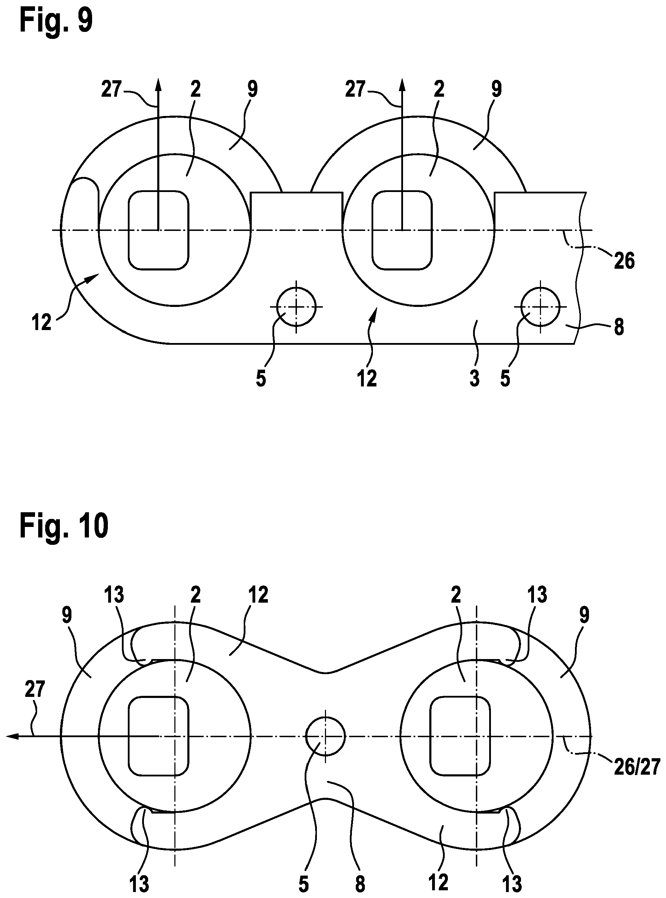

Fig. 9 zeigt eine Querschnittsdarstellung einer Flansch-Ventil-Anordnung 1 gemäß einer sechsten Ausführungsform.

In dieser Ausführungsform weist der Flansch 3 mehrere Verbindungsmöglichkeiten zur lösbaren und verlier-sicheren Verbindung mit mehreren Ventilen 2 auf.

Hierbei weist der Flansch 3 zumindest zwei Aufsteckabschnitte 12 auf. Obwohl in Fig. 9 zwei Aufsteckabschnitte 12 dargestellt sind, kann die Anzahl der Aufsteckabschnitte 12 auch mehr als zwei sein, beispielsweise drei oder mehr oder vier oder mehr. An jedem der Aufsteckabschnitte 12 ist ein Ventil 2 befestigt.

Die Aufsteckabschnitte 12 sind durch einen Befestigungsabschnitt 8 miteinander verbunden. Der Befestigungsabschnitt 8 weist hierbei zwei Durchgangsbohrungen 5 auf, insbesondere eine Durchgangsbohrung 5 für jeden Aufsteckabschnitt 12. Die Anzahl der Durchgangsbohrungen 5 muss allerdings nicht der Anzahl der Aufsteckabschnitte 12 entsprechen.

In dieser Ausgestaltung sind die mehreren Aufsteckabschnitte 12 mit Bezug auf eine Längserstreckungsrichtung 26 des Flansches 3 in einer Reihenanordnung angeordnet. Dabei sind die Aufsteckabschnitte 12 in einer Öffnungsrichtung 27 senkrecht zur Längserstreckungsrichtung 26 geöffnet. Die Öffnungsrichtung 27 ist hierbei als Richtung definiert, welche mittig durch den Aufsteckabschnitt 12 vom geschlossenen Ende am Befestigungsabschnitt 8 zum geöffneten Ende des Aufsteckabschnitts 12 verläuft.

Mit anderen Worten wird bei der Öffnung senkrecht zur Längserstreckungsrichtung 26 das Ventil 2 senkrecht zur Längserstreckungsrichtung 26 des Flansches 3 relativ zum Flansch 3 bewegt, um den Flansch 3 und das Ventil 2 miteinander zu verbinden.

Vorzugsweise sind, wie in Fig. 9 dargestellt, alle Aufsteckabschnitte 12 in gleicher Öffnungsrichtung 27 senkrecht zur Längserstreckungsrichtung 26 ausgerichtet.

Alternativ dazu ist vorteilhafterweise zumindest ein Aufsteckabschnitt 12 gegenüber zumindest einem weiteren Aufsteckabschnitt 12 mit Bezug auf die Öffnungsrichtung 27 senkrecht zur Längserstreckungsrichtung 26 im Wesentlichen entgegengesetzt geöffnet. Mit anderen Worten kann in der Fig. 9 auch zumindest ein Aufsteckabschnitt 12 nach unten hin geöffnet sein.

Durch diese Ausgestaltung des Flansches 3 ist es möglich, mehrere Ventile 2 mit einem verliersicher verbundenen Flansch 3 an der Vorrichtung 100 zu befestigen. Dabei kann jedes Ventil 2 relativ zum Flansch 3 verdreht werden, um eine platzsparende Anordnung der Ventile 2 zu ermöglichen.

In Fig. 9 ist dargestellt, dass die Aufsteckabschnitte 12 senkrecht zur Längserstreckungsrichtung 26 geöffnet sind. Die Öffnungsrichtungen 27 der Aufsteckabschnitte 12 sind jedoch nicht zwangsläufig senkrecht zur Längserstreckungsrichtung 26. Vielmehr können die Öffnungsrichtungen 27 einen Winkel ungleich 90° zur Längserstreckungsrichtung 26 aufweisen, beispielsweise einen Winkel von 45° bis 80°, bevorzugt 50° bis 70°, bevorzugt 60° zur Längserstreckungsrichtung 26 aufweisen.

Alternativ oder zusätzlich zur Reihenanordnung kann der Flansch 3 Aufsteckabschnitte 12 aufweisen, welche nicht in Reihenanordnung angeordnet sind. Beispielsweise können zumindest zwei Aufsteckabschnitte 12 diagonal zueinander angeordnet sein, wobei diese insbesondere in im Wesentlichen entgegengesetzte Richtungen geöffnet sind.

Hierbei bedeutet "im Wesentlichen entgegengesetzt", dass die Öffnungen genau entgegengesetzt sind, also eine Öffnung senkrecht nach oben geöffnet ist und eine Öffnung senkrecht nach unten geöffnet ist, oder dass die Öffnungen mit (insbesondere voneinander verschiedenen) Winkeln zur Längserstreckungsrichtung 26 voneinander weg zeigen. Dabei würde beispielsweise ein Aufsteckabschnitt 12 nach links unten in Fig. 9 geöffnet sein und ein Aufsteckabschnitt 12 nach rechts oben in Fig. 9 geöffnet sein, wobei beide in entgegengesetzte Richtungen (unten und oben) geöffnet sind.

Obwohl dies in Fig. 9 nicht dargestellt ist, weisen die Ventile 2 in den Fällen von Vorsteuerventilen oder Cartridge-Ventilen vorzugsweise Stecker auf, mittels welcher das Ventil 2 gesteuert wird. Durch diese drehbare Anordnung der mehreren Ventile 2 können die Ventile 2 mit solchen Steckern möglichst platzsparend angeordnet werden.

Fig. 10 zeigt eine Querschnittsdarstellung einer Flansch-Ventil-Anordnung 1 gemäß einer siebten Ausführungsform.

In dieser Ausführungsform weist der Flansch 3 ebenfalls mehrere Verbindungsmöglichkeiten zur Verbindung von mehreren Ventilen 2 auf. Hierbei weist der Flansch 3 zwei Aufsteckabschnitte 12 auf.

Die Aufsteckabschnitte 12 sind in dieser Ausführungsform ebenfalls entlang der Längserstreckungsrichtung 26 des Flansches 3 in Reihenanordnung angeordnet. Hierbei sind die Aufsteckabschnitte 12 in entgegengesetzten Öffnungsrichtungen 27 geöffnet. Die Aufsteckabschnitte 12 sind dabei jeweils parallel zur Längserstreckungsrichtung 26 geöffnet. Die vorstehend erläuterten Ausführungsformen können geeignet miteinander kombiniert werden.

Beispielsweise können die Flansche 3 der Figuren 9 und 10 Haltenasen 13 aufweisen (wie in Fig. 10 dargestellt) und/oder das Ventil 2 kann einen mehrkantigen Querschnittsabschnitt 14 aufweisen. Die mehreren Aufsteckabschnitte 12 eines Flansches 3 können außerdem beispielsweise den vergrößerten Innenumfang der Fig. 5 bis 7 aufweisen. Des Weiteren kann eine untere Oberfläche des Flansches 3 mit mehreren Aufsteckabschnitten 12 die vorstehend erläuterten geometrischen Strukturen 24 aufweisen. Die mit Bezug auf die Figuren 9 und 10 erläuterten Möglichkeiten der mehreren Aufsteckabschnitte 12 können vorteilhafterweise jeweils mehrere Reihen der Aufsteckabschnitte 12 aufweisen.

Neben der vorstehenden schriftlichen Beschreibung der Erfindung wird zu deren ergänzender Offenbarung hiermit explizit auf die zeichnerische Darstellung der Erfindung in den Fig. 1 bis 10 Bezug genommen, wobei lediglich die Figuren 3 und 8 von den Ansprüchen gestützt werden.

### Bezugszeichenliste

- 1: Flansch-Ventil-Anordnung
- 2: Ventil
- 3: Flansch
- 4: Aufnahme für Ventil
- 5: Durchgangsbohrung
- 6: Aussparung der Vorrichtung
- 7: Schraube
- 8: Befestigungsabschnitt des Flansches
- 9: Flächenabschnitt des Ventils
- 10: Einschubrichtung
- 11: Dicke des Flächenabschnitts des Ventils
- 12: Aufsteckabschnitt
- 13: Haltenase
- 14: Querschnittsabschnitt/Querschnittsfläche des Ventils
- 15: Außenfläche des Querschnittsabschnitts
- 16: Bohrung in Vorrichtung
- 17: gerade Umfangsabschnitte des Ventils
- 18: Radius des Querschnittsabschnitts
- 19: Aufsteckrichtung des Flansches an dem Ventil
- 20: Drehrichtung
- 21: Durchmesser des Querschnittsabschnitts
- 22: gerade Abschnitte des Aufsteckabschnitts des Flansches
- 23: runder Abschnitt des Aufsteckabschnitts des Flansches
- 24: geometrische Strukturen/Rippen
- 25: untere Oberfläche des Flansches
- 26: Längserstreckungsrichtung des Flansches
- 27: Öffnungsrichtung des Aufsteckabschnitts
- 100: Vorrichtung

## Patentansprüche

1. Flansch-Ventil-Anordnung (1) zur Befestigung von Ventilen (2) in oder an einer Vorrichtung (100), aufweisend:
• zumindest ein Ventil (2); und
• zumindest einen Flansch (3), wobei
• das zumindest eine Ventil (2) und der zumindest eine Flansch (3) zumindest in einem nicht in der Vorrichtung (100) eingebauten Zustand des Ventils (2) lösbar und verlier-sicher miteinander verbindbar sind, wobei der zumindest eine Flansch (3) zumindest eine Haltenase (13) aufweist, welche eingerichtet ist, in einem an dem Ventil (2) befestigten Zustand des Flansches (3) an dem Ventil (2) anzuliegen;
• **dadurch gekennzeichnet, dass** ein Querschnittsabschnitt (14) des Ventils (2), an welchem der Flansch (3) aufsteckbar ist, im Wesentlichen rund ist und zumindest einen geraden Umfangsabschnitt (17) aufweist, wobei ein Radius (18) des Querschnittsabschnitts (14) an dem zumindest einen geraden Umfangsabschnitt (17) geringer ist, als an anderen Umfangsabschnitten des Querschnittsabschnitts (14), sodass eine Verbindungskraft zwischen dem Flansch (3) und dem Ventil (2) abhängig von einem Drehwinkel zwischen dem Flansch (3) und dem Ventil (2) ist.

2. Flansch-Ventil-Anordnung (1) nach Anspruch 1, wobei das zumindest eine Ventil (2) und der zumindest eine Flansch (3) mittels einer Formschluss-Verbindung miteinander verbindbar sind.

3. Flansch-Ventil-Anordnung (1) gemäß einem der vorherigen Ansprüche, wobei der zumindest eine Flansch (3) und/oder das zumindest eine Ventil (2) derart ausgebildet sind, dass eine relative Drehung (20) zwischen dem Flansch (3) und dem Ventil (2), in einem an dem Ventil (2) befestigten Zustand des Flansches (3), ermöglicht ist.

4. Flansch-Ventil-Anordnung (1) nach einem der vorherigen Ansprüche, wobei der Flansch (3) zumindest einen Aufsteckabschnitt (12) zur Befestigung des Flansches (3) an dem zumindest einen Ventil (2) aufweist, wobei der zumindest eine Aufsteckabschnitt (12) jeweils die zumindest eine Haltenase (13) aufweist.

5. Flansch-Ventil-Anordnung (1) nach Anspruch 4, wobei der zumindest eine Aufsteckabschnitt (12) und das Ventil (2) derart ausgebildet sind, dass eine Verbindungskraft zwischen dem Aufsteckabschnitt (12) und dem Ventil (2) in Abhängigkeit einer Einschubtiefe des Ventils (2) in dem Aufsteckabschnitt (12) zunimmt oder abnimmt.

6. Flansch-Ventil-Anordnung (1) nach Anspruch 4 oder Anspruch 5, wobei der zumindest eine Aufsteckabschnitt (12) eine Teilkreisform, insbesondere eine Gabelschlüsselform, aufweist.

7. Flansch-Ventil-Anordnung (1) nach einem der Ansprüche 4 bis 6, wobei der zumindest eine Flansch (3) eine Mehrzahl von Aufsteckabschnitten (12) aufweist, wobei die mehreren Aufsteckabschnitte (12) mit Bezug auf eine Längserstreckungsrichtung (26) des Flansches (3) in einer Reihenanordnung angeordnet sind, wobei die Aufsteckabschnitte (12) insbesondere senkrecht zur Längserstreckungsrichtung (26) geöffnet sind und/oder in Längserstreckungsrichtung (26) geöffnet sind.

8. Flansch-Ventil-Anordnung (1) nach einem der vorherigen Ansprüche, wobei der Flansch (3) und/oder das Ventil (2) jeweils an zumindest einer Fläche, welche das jeweils andere Element (2, 3) in einem an dem Ventil (2) befestigten Zustand des Flansches (3) berührt, Oberflächenstrukturen (24) aufweist/aufweisen.

## Claims

1. Flange-valve arrangement (1) for attaching valves (2) in or to a device (100), comprising:
• at least one valve (2); and
• at least one flange (3),
• the at least one valve (2) and the at least one flange (3) being detachably and captively interconnectable, at least in a state when the valve (2) is not installed in the device (100), the at least one flange (3) having at least one retaining lug (13) which is designed to abut the valve (2) in a state when the flange (3) is attached to the valve (2);
• **characterized in that** a cross-section portion (14) of the valve (2), on which the flange (3) can be mounted, is substantially round and has at least one straight circumferential portion (17), a radius (18) of the cross-section portion (14) at the at least one straight circumferential portion (17) being smaller than at other circumferential portions of the cross-section portion (14), such that a connecting force between the flange (3) and the valve (2) depends on a rotation angle between the flange (3) and the valve (2).

2. Flange-valve arrangement (1) according to claim 1, wherein the at least one valve (2) and the at least one flange (3) can be interconnected by means of a form-fitting connection.

3. Flange-valve arrangement (1) according to any of the preceding claims, wherein the at least one flange (3) and/or the at least one valve (2) are designed such that a relative rotation (20) between the flange (3) and the valve (2) is allowed in a state when the flange (3) is attached to the valve (2).

4. Flange-valve arrangement (1) according to any of the preceding claims, wherein the flange (3) has at least one mounting portion (12) for attaching the flange (3) to the at least one valve (2), wherein the at least one mounting portion (12) has at least one retaining lug (13).

5. Flange-valve arrangement (1) according to claim 4, wherein the at least one mounting portion (12) and the valve (2) are designed such that a connecting force between the mounting portion (12) and the valve (2) increases or decreases depending on the insertion depth of the valve (2) in the mounting portion (12).

6. Flange valve arrangement (1) according to claim 4 or claim 5, wherein the at least one mounting portion (12) has a partially circular shape, in particular an open-ended-wrench shape.

7. Flange-valve arrangement (1) according to any of claims 4 to 6, wherein the at least one flange (3) has a plurality of mounting portions (12), wherein the plurality of mounting portions (12) are in a row arrangement with respect to a longitudinal extension direction (26) of the flange (3), wherein the mounting portions (12) are open in particular perpendicularly to the longitudinal extension direction (26) and/or are open in the longitudinal extension direction (26).

8. Flange-valve arrangement (1) according to any of the preceding claims, wherein the flange (3) and/or the valve (2) each have surface structures (24) on at least one face which is in contact with the other element (2, 3) in a state when the flange (3) is attached to the valve (2).

## Revendications

1. Agencement de vanne à bride (1) pour la fixation de vannes (2) dans ou sur un dispositif (100), présentant :
• au moins une vanne (2) ; et
• au moins une bride (3), dans lequel
• l'au moins une vanne (2) et l'au moins une bride (3) peuvent être reliées entre elles de manière amovible et de manière à être imperdables, au moins lorsque la vanne (2) n'est pas montée dans le dispositif (100), dans lequel l'au moins une bride (3) présente au moins un ergot de retenue (13) qui est conçu pour s'appuyer contre la vanne (2) lorsque la bride (3) est fixée à la vanne (2) ;
• **caractérisé en ce qu'**une section de section transversale (14) de la vanne (2), sur laquelle la bride (3) peut être emboîtée, est sensiblement circulaire et présente au moins une section périphérique droite (17), dans lequel le rayon (18) de la section de section transversale (14) au niveau de l'au moins une section périphérique droite (17) est plus petit qu'au niveau d'autres sections périphériques de la section de section transversale (14), de sorte qu'une force de liaison entre la bride (3) et la vanne (2) dépend d'un angle de rotation entre la bride (3) et la vanne (2).

2. Agencement de vanne à bride (1) selon la revendication 1, dans lequel l'au moins une vanne (2) et l'au moins une bride (3) peuvent être reliées entre elles au moyen d'une liaison par complémentarité de forme.

3. Agencement de vanne à bride (1) selon l'une des revendications précédentes, dans lequel l'au moins une bride (3) et/ou l'au moins une vanne (2) sont réalisées de telle sorte que, lorsque la bride (3) est fixée à la vanne (2), une rotation relative (20) entre la bride (3) et la vanne (2) est possible.

4. Agencement de vanne à bride (1) selon l'une des revendications précédentes, dans lequel la bride (3) présente au moins une section d'emboîtement (12) pour la fixation de la bride (3) à l'au moins une vanne (2), dans lequel l'au moins une section d'emboîtement (12) présente respectivement l'au moins un ergot de retenue (13).

5. Agencement de vanne à bride (1) selon la revendication 4, dans lequel l'au moins une section d'emboîtement (12) et la vanne (2) sont réalisées de telle sorte qu'une force de liaison entre la section d'emboîtement (12) et la vanne (2) augmente ou diminue en fonction de la profondeur d'insertion de la vanne (2) dans la section d'emboîtement (12).

6. Agencement de vanne à bride (1) selon la revendication 4 ou la revendication 5, dans lequel l'au moins une section d'emboîtement (12) présente une forme de cercle partiel, en particulier une forme de clé à fourche.

7. Agencement de vanne à bride (1) selon l'une des revendications 4 à 6, dans lequel l'au moins une bride (3) présente une pluralité de sections d'emboîtement (12), dans lequel les sections d'emboîtement (12) sont disposées, par rapport à une direction d'extension longitudinale (26) de la bride (3), dans un agencement en rangée, dans lequel les sections d'emboîtement (12) sont ouvertes en particulier perpendiculairement à la direction d'extension longitudinale (26) et/ou sont ouvertes dans la direction d'extension longitudinale (26).

8. Agencement de vanne à bride (1) selon l'une des revendications précédentes, dans lequel la bride (3) et/ou la vanne (2) présentent, respectivement sur au moins une surface qui est en contact avec l'autre élément (2, 3) respectif lorsque la bride (3) est fixée à la vanne (2), des structures de surface (24).
